(19) Europäisches Patentamt
European Patent Office
Office européen des brevets

(11) EP 3 039 966 A1

(12) EUROPEAN PATENT APPLICATION

(43) Date of publication:
06.07.2016 Bulletin 2016/27

(51) Int Cl.:
A21B 7/00 (2006.01)

(21) Application number: 15201474.2

(22) Date of filing: 21.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.12.2014 CN 201410843394

(71) Applicant: Tsann Kuen (Zhangzhou) Enterprise
Co., Ltd.
Fujian 363107 (CN)

(72) Inventors:
• SUN, Xiaosen
363107 Zhangzhou (CN)
• HAN, Yafei
363107 Zhangzhou (CN)
• ZHANG, Zhonghua
363107 Zhangzhou (CN)
• XU, Jiaping
363107 Zhangzhou (CN)

(74) Representative: Regimbeau
20, rue de Chazelles
75847 Paris Cedex 17 (FR)

(54) BREAD MAKER AND CONTAINER TO BE MOUNTED IN THE BREAD MAKER

(57) The bread maker includes a housing (1) for mounting of a container, an infrared transceiving device (2) and a determining device (5). The container stores bread ingredients therein and has an outer surface (90) provided with a color symbol (91). The infrared transceiving device (2) includes an infrared emitting unit (3) and a processing unit (4). The infrared emitting unit (3) is operable to emit infrared ray toward the color symbol (91) when the container is mounted to the housing (1). The processing unit (4) is configured for receiving a reflection ray reflected from the color symbol (91) and is operable to output an identification signal according to intensity of the reflection ray. Thedetermining device (5) is communicatively connected to the processing unit (4) for receiving the identification signal and is operable to determine, with reference to the identification signal, a bread-making indicator that is associated with a bread making program, which the bread maker executes automatically to make bread using the bread ingredients stored in the container.

FIG.1

EP 3 039 966 A1

**Description**

This disclosure relates to a bread maker, more particularly to a bread maker for automatically making bread using bread ingredients stored in a container.

A conventional bread maker can automatically make bread with a sequence of procedures including mixing bread ingredients disposed therein, rising, kneading and baking. However, the bread ingredients for making different kinds of bread vary significantly, and it is relatively cumbersome to measure the amounts of ingredients for each bread making.

Another conventional bread maker is designed for receiving a container therein and includes a barcode reader. The container stores bread ingredients therein, and is printed with a barcode thereon. The barcode contains information regarding the bread ingredients stored in the container. The barcode reader reads out the information of the barcode, and the conventional bread maker can automatically make bread using a bread making program according to the information thus read. However, the user cannot intuitively recognize containers storing different bread ingredients.

Therefore, the present disclosure is to provide a bread maker for mounting of a container with a color symbol disposed on an outer surface thereof.

According to this disclosure, a bread maker is for mounting a container. The container stores bread ingredients therein and has an outer surface provided with a color symbol. The bread maker includes a housing, an infrared transceiving device and a determining device. The housing is for mounting the container. The infrared transceiving device is mounted to the housing and includes an infrared emitting unit and a processing unit. The infrared emitting unit is operable to emit infrared ray toward the color symbol of the container when the container is mounted to the housing. The processing unit is configured for receiving a reflection ray reflected from the color symbol and is operable to output an identification signal according to intensity of the reflection ray. The determining device is communicatively connected to the processing unit for receiving the identification signal and is operable to determine, with reference to the identification signal, a bread making indicator that is associated with a bread making program, which the bread maker executes automatically to make bread using the bread ingredients stored in the container.

Other features and advantages of the present disclosure will become apparent in the following detailed description of the embodiment of the disclosure, with reference to the accompanying drawings, in which:

FIG. 1 is a perspective view of an embodiment of a bread maker for mounting of a container according to the present disclosure;
FIG. 2 is a schematic top view of the embodiment for illustrating infrared (IR) transceiving devices of the embodiment respectively corresponding in position to color symbols disposed on the container;
FIG. 3 is a block diagram illustrating the IR transceiving devices and a determining device of the embodiment;
FIG. 4 is circuit diagram of one of the IR transceiving devices including an IR emitting unit and a processing unit; and
FIG. 5 illustrates relation between discrete values and different color symbols of the embodiment.

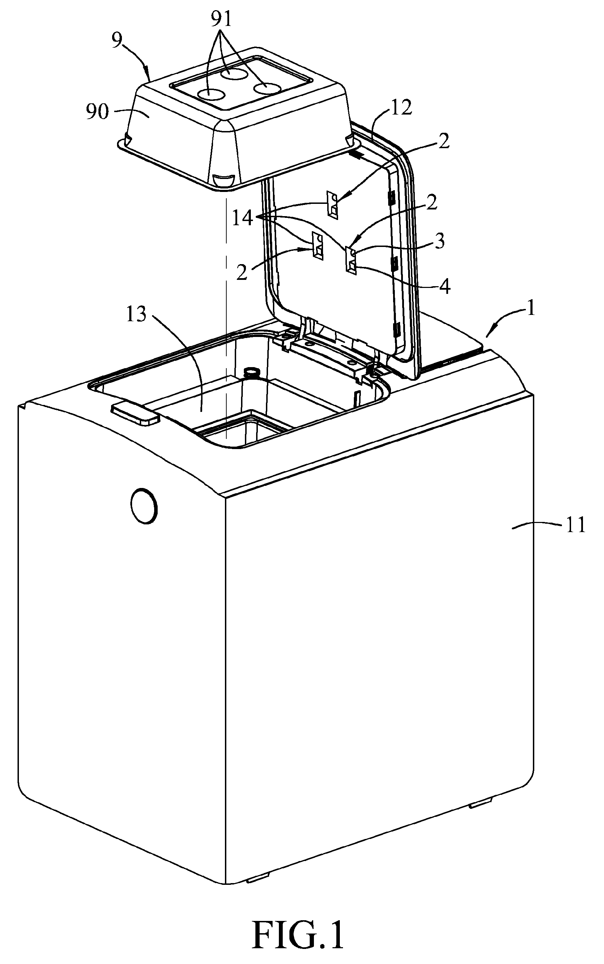

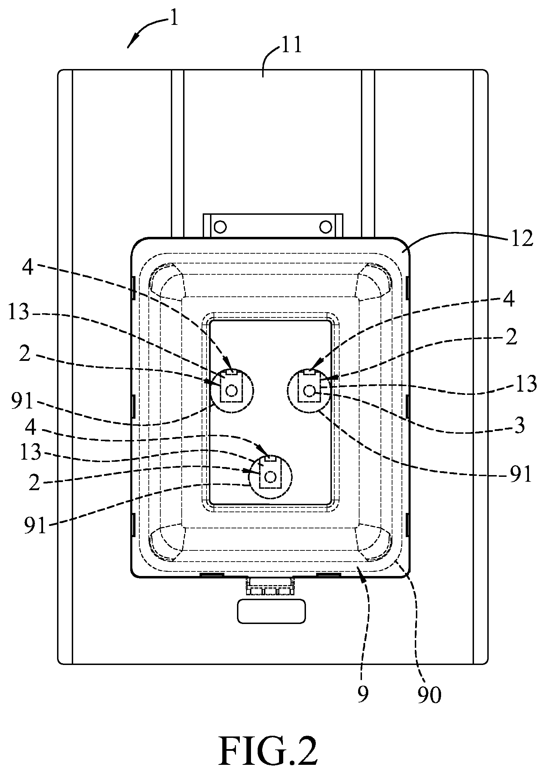

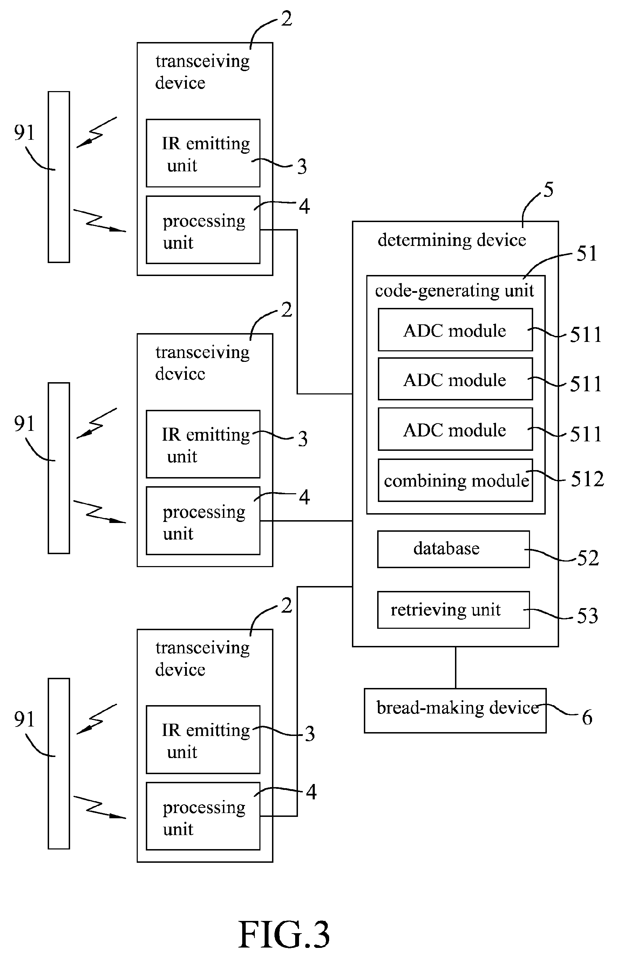

Referring to FIGS. 1 to 3, the embodiment of the bread maker according to the present disclosure is to be mounted with a container 9 therein. The container 9 stores bread ingredients therein, and has an outer surface 90 provided with three color symbols 91. The container 9 may be processed by a nitrogen gas packing procedure so as to preserve bread ingredients stored therein. In this embodiment, the number of the color symbols 91 is three and the disclosure is not limited in this respect. Further, the outer surface 90 of the container 9 has a color different from those of the color symbols 91. The container 9 may be made of a material selected from aluminum, plastic, silicon, polylactic acid (PLA) and ethylene vinyl alcohol copolymer (EVOH). Note that the feature of this disclosure does not reside in the material for manufacturing the container 9 and the container 9 may be made of other materials.

The bread maker includes a housing 1, a plurality of infrared (IR) transceiving devices 2, a determining device 5 and a bread-making device 6. The number of the IR transceiving devices 2 corresponds to that of the color symbols 91 and is three in this embodiment. Each of the IR transceiving devices 2 includes an IR emitting unit 3 and a processing unit 4.

The housing 1 includes a main body 11 and a cover 12. The main body 11 is formed with a receiving space 13 for mounting of the container 9. The cover 12 is disposed to cover a top opening of the receiving space 13, and is formed with three grooves 14 that face the receiving space 13 and that respectively correspond in position to the color symbols 91 when the container 9 is properly disposed in the receiving space 13 and the cover 12 covers the top opening of the receiving space 13. The IR transceiving devices 2 are disposed in the grooves 14, respectively, such that the IR transceiving devices 2 respectively correspond in position to and are directed to the color symbols 91 when the container 9 is properly disposed in the receiving space 13 and the cover 12 covers the top opening of the receiving space 13.

The IR emitting unit 3 of each of the IR transceiving devices 2 is operable to emit infrared ray toward a respective one of the color symbols 91 of the container 9 when the container 9 is mounted to the housing 1. In this embodiment, the IR emitting unit 3 is an IR light emitting diode (LED) with a voltage drop equal to 1.4V across it, and is capable of emitting an invisible IR light having a wavelength that ranges from 850nm to 950nm.

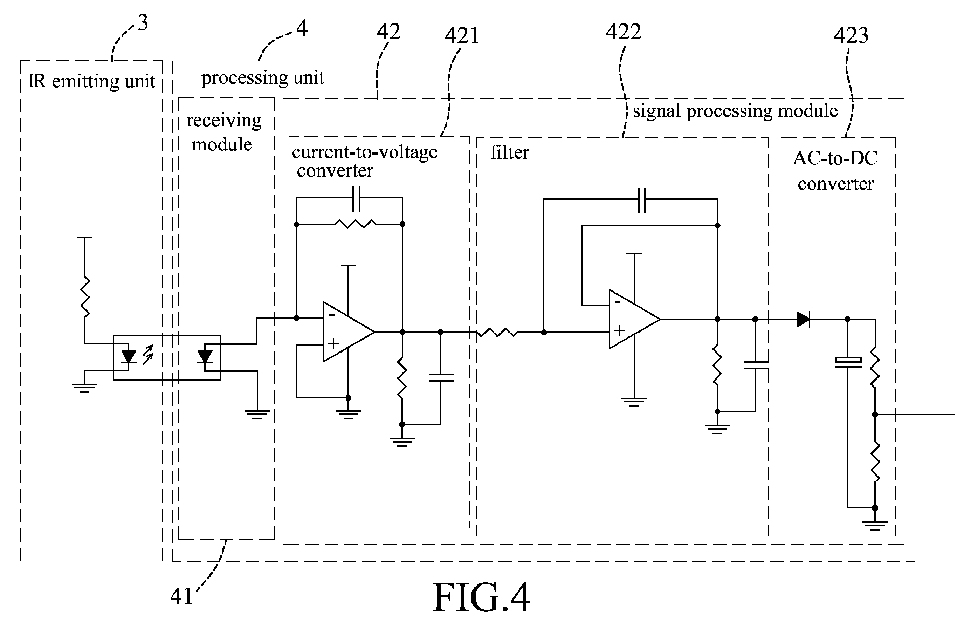

Further referring to FIG. 4, the processing unit 4 of each of the transceiving devices 2 is configured for receiving a reflection ray reflected from the respective one of the color symbols 91, and is operable to output an identification signal according to intensity of the reflection ray. In particular, the processing unit 4 includes a receiving module 41 and a signal processing module 42. The receiving module 41 is configured for receiving a reflection ray reflected from the corresponding one of the color symbols 91 and for outputting a measurement current signal indicative of the intensity of the reflection ray. It should be noted that the intensity of the reflection ray is associated with the color of the color symbols 91. For example, the intensity of a red color symbol is greater than that of a black color symbol because the reflection rate of the red color symbol is larger than that of the black color symbol.

The signal processing module 42 is electrically coupled to the receiving module 41 for receiving the measurement current signal, and is configured to process the measurement current signal. Specifically, the signal processing module 42 includes a current-to-voltage converter 421, a filter 422 and an alternating-current-to-direct-current (AC-to-DC) converter 423. The current-to-voltage converter 421 is for converting the measurement current signal into an electric voltage signal. The filter 422 is electrically coupled to the current-to-voltage converter 421 for filtering and amplifying the electric voltage signal to output a processed AC voltage signal. The AC-to-DC converter 423 is electrically coupled to the filter 422 for converting the processed AC voltage signal into a DC voltage signal as the identification signal. Since the feature of this disclosure does not reside in the specific configuration of the current-to-voltage converter 421, the filter 422, and the AC-to-DC converter 423, detailed structures of the same are omitted herein for the sake of brevity.

The determining device 5 is mounted in the main body 11 and is communicatively connected to the processing units 4 of the transceiving devices 2 for receiving the identification signals therefrom. The determining device 5 is operable to determine, with reference to the identification signals, a bread-making indicator that is associated with a bread making program, which the bread maker executes automatically to make bread using the bread ingredients stored in the container 9.

The determining device 5 includes a code-generating unit 51, a database 52 and a retrieving unit 53. The code-generating unit 51 includes three *n*-bit analog-to-digital converting (ADC) modules 511, and a combining module 512. Each of the ADC modules 511 is for calculating a discrete value based on a reference voltage value and a respective one of the identification signals. For example, each of the ADC modules 511 is coupled to a respective one of the processing units 4, and is configured to calculate the discrete value based on the reference voltage value and the identification signal received from the respective one of the processing units 4.

Each of the ADC modules 511 is configured to calculate the discrete value according to the following equation:

$$\text{discrete value} = 2^n \times {V_r}\big/{VDD} \text{,}$$

where $V_r$ represents a voltage value of the identification signal, *VDD* represents the reference voltage value, and *n* is an integer greater than or equal to 0.

In this embodiment, each of the ADC modules 511 is for receiving the respective one of the identification signals, and is an 8-bits analog-to-digital converter with the reference voltage value (VDD) of 5V, and thus *n* equals to 8.

Table 1

| Color | Black | Green | Red | Blue | Orange | White |
|---|---|---|---|---|---|---|
| Discrete Value | 4 | 96 | 106 | 113 | 154 | 174 |
| Identification Signal (V) | 0.078 | 1.88 | 2.07 | 2.2 | 3.01 | 3.39 |
| VDD (V) | 5 | 5 | 5 | 5 | 5 | 5 |

As shown in Table 1 above, some examples of the discrete values calculated based on the reference voltage value of 5V and the respective one of the identification signals are illustrated. The discrete values are obtained by rounding off the calculation of $2^n \times {V_r}\big/{VDD}$ in this embodiment and may be rounded to integer by other rounding means. It should be noted that the discrete value is 0 when the voltage value of the identification signal is 0, and the discrete value is 256 when the voltage value of the identification signal is equal to the reference voltage value.

The combining module 512 is for converting the discrete values into an identification code. In particular, the combining module 512 combines the discrete values into a single identification code, for example, by stringing the discrete values together into a single code. In a case that the color symbols 91 are red, blue and orange, respectively, the identification code is "106113154" accordingly.

The database 52 stores a plurality of reference codes and a plurality of bread-making parameter sets that correspond to the reference codes, respectively. Each of the bread-making parameter sets indicates a sequence of processes, and includes a plurality of parameters for making bread, such as time durations for mixing bread ingredients, rising dough, kneading and baking, temperature for baking, etc. It should be noted that the parameters for making bread are not limited to those described above.

The retrieving unit 53 is for comparing the identification code generated by the code-generating unit 5 with the reference codes stored in the database 52, and for retrieving, from the database 52, one of the bread-making parameter sets as the bread-making indicator which corresponds to one of the reference codes that conforms to the identification code.

The bread-making device 6 is mounted in the main body 11 and is communicatively connected to the determining device 5 so as to automatically execute the bread making program according to the bread-making indicator (i.e., the sequence of processes and parameters of the retrieved one of the bread-making parameter sets) to make bread using the bread ingredients stored in the container 9. The bread-making device 6 includes a piercing mechanism (not shown) for breaking the container 9, and the detailed structure of the mechanism is omitted herein.

In an alternative embodiment, the bread-making indicator may be an index, and the bread-making parameter sets are stored in the bread-making device 6. Thus, the bread-making device 6 is operable to retrieve one of the bread-making parameter sets with reference to the index received from the determining device 5.

Additionally, when the container 9 is mounted improperly to the housing 1 and/or the retrieving unit 53 fails to retrieve a reference code conforming to the identification code, the determining device 5 would output an alerting signal, for example, in a form of a beep, or flashing light.

As shown in FIG. 1, to use the bread maker, the cover 12 is first uncovered and the container 9 is placed into the receiving space 13 and then the cover 12 is covered on the main body 11 such that the IR transceiving devices 2 mounted respectively in the grooves 14 are registered with and close to the color symbols 91, respectively. By this way, the IR transceiving devices 2 would not interfere with each other. For each of the IR transceiving devices 2, the infrared emitting unit 3 emits infrared ray toward the respective one of the color symbols 91, and the processing unit 4 receives the reflection ray reflected from the respective one of color symbols 91 and outputs the identification signal according to the intensity of the reflection ray. The determining device 5 receives the identification signals from the processing units 4 of the IR transceiving devices 2 and provides the bread-making indicator to the bread making device 6, such that the bread making device 6 executes the bread making program according to the bread-making indicator so as to automatically make bread using the bread ingredients stored in the container 9.

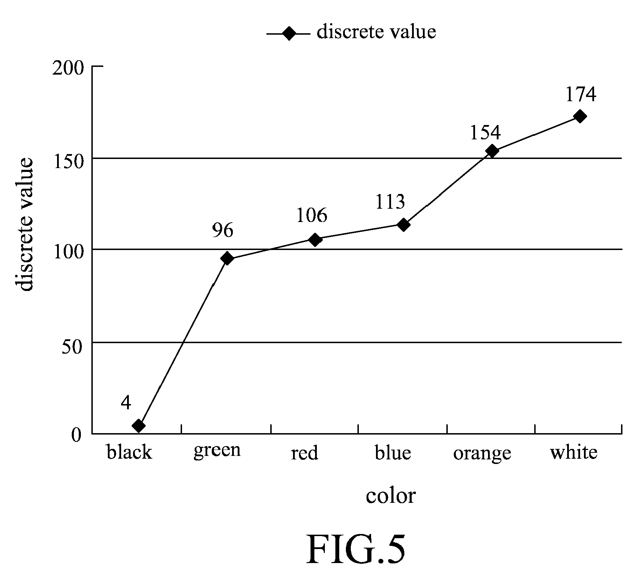

Note that in this embodiment, the color symbols 91 may be selected from black, green, red, blue, orange and white. Further referring to FIG. 5, a profile is shown to illustrate the relation between the discrete values and different color symbols 91. It can be appreciated that different colors may be used as the color symbols 91 in other embodiments.

In this embodiment, three color symbols 91 selected from six colors (black, green, red, blue, orange and white) are provided on the container 9. Thus, there are $6 \times 6 \times 6 = 216$ permutations of three color symbols 91, resulting in 216 identification codes. Therefore, 216 kinds of bread ingredients used for making 216 different kinds of bread may be stored in the container 9.

It can be appreciated that the number of the color symbols 91, the number of the IR transceiving devices 2 and the number of the ADC modules 511 of the determining device 5 are not limited to three and may be varied according to the specific demands.

To sum up, in the present disclosure, by virtue of the IR transceiving devices 2 and the determining device 5, the bread making device 6 can automatically make bread by executing the bread making program according to the bread-making indicator that corresponds to one of the reference codes conforming to the identification code associated with the combination of the color symbols 91 on the container 9. It is convenient for the user to make bread without measuring amounts of various bread ingredients. Further, it is relatively simple for the user to recognize various containers 9 storing different bread ingredients by the color symbols 91 disposed on the containers 9. For instance, when the containers 9 storing different bread ingredients are to be storage in a warehouse, the staff of the warehouse can recognize different containers 9 by the color symbols 91 and so as to categorize and place the containers 9 effectively. In the case that a consumer who cannot read the name or description on the product package of the container 9, the consumer can easily recognize the container 9 by the color symbols 91.

**Claims**

1. A bread maker configured for mounting a container that stores bread ingredients therein and that has an outer surface (90) provided with a color symbol (91), said bread maker comprising:

a housing (1) for mounting of the container (9);
an infrared transceiving device (2) mounted to said housing (1), and including

an infrared emitting unit (3) that is operable to emit infrared ray toward the color symbol (91) of the container (9) when the container (9) is mounted to said housing (1), and
a processing unit (4) that is configured for receiving a reflection ray reflected from the color symbol (91) and that is operable to output an identification signal according to intensity of the reflection ray; and

a determining device (5) communicatively connected to said processing unit (4) for receiving the identification signal therefrom, and being operable to determine, with reference to the identification signal, a bread-making indicator that is associated with a bread making program, which said bread maker executes automatically to make bread using the bread ingredients stored in the container (9).

2. The bread maker as claimed in Claim 1, wherein said processing unit (4) includes:

a receiving module (41) for receiving the reflection ray and for outputting a measurement current signal indicative of the intensity of the reflection ray; and
a signal processing module (42) electrically coupled to said receiving module (41) for receiving the measurement current signal, and configured to process the measurement current signal and to output a direct-current (DC) voltage signal as the identification signal.

3. The bread maker as claimed in Claim 2, wherein said signal processing module (42) includes:

a current-to-voltage converter (421) electrically coupled to said receiving module (41) for converting the measurement current signal receipt therefrom into an electric voltage signal;
a filter (422) electrically coupled to said current-to-voltage converter (421) for filtering and amplifying the electric voltage signal received therefrom to output a processed alternating-current (AC) voltage signal; and
an AC-to-DC converter (423) electrically coupled to said filter (422) for converting the processed AC voltage signal received therefrom into the DC voltage signal.

4. The bread maker as claimed in Claim 1, wherein said determining device (5) includes:

a code-generating unit (51) for generating an identification code with reference to the identification signal;
a database (52) storing a plurality of reference codes, and a plurality of bread-making parameter sets that correspond to the reference codes, respectively; and
a retrieving unit (53) for comparing the identification code generated by said code-generating unit (5) with the reference codes stored in said database (52), and for retrieving, from said database (52), one of the bread-making parameter sets as the bread-making indicator which corresponds to one of the reference codes that conforms to the identification code;
wherein said bread maker executes the bread making program according said one of the bread-making parameter sets to make bread using the bread ingredients stored in the container (9).

5. The bread maker as claimed in Claim 4, wherein said code-generating unit (51) includes an n-bit analog-to-digital converting (ADC) module (511) for calculating a discrete value based on the identification signal and a reference voltage value, and a combining module (512) for converting the discrete value into the identification code, the discrete value being calculated according to the following equation:

$$\text{discrete value} = 2^n \times V_r \Big/ VDD,$$

where $V_r$ represents a voltage value of the identification signal, VDD represents the reference voltage value, and $n$ is an integer greater than or equal to 0.

6. The bread maker as claimed in Claim 1, further comprising a bread-making device (6) communicatively connected to said determining device (5) for receiving the bread-making indicator and configured to execute the bread making program according to the bread-making indicator to make bread.

7.  The bread maker as claimed in Claim 1, the outer surface (90) of the container (9) being provided with a plurality of the color symbols (91),

    wherein said bread maker comprises a plurality of said infrared transceiving devices (2) that correspond in position to the color symbols (91), respectively, and that are operable to emit infrared rays toward the color symbols (91), respectively,

    wherein said processing unit (4) of each of said infrared transceiving devices (2) is configured for receiving the reflection ray reflected from a corresponding one of the color symbols (91), and is operable to output the identification signal according to the intensity of the reflection ray received thereby.

8.  The bread maker as claimed in Claim 7, wherein said determining device (5) includes:

    a code-generating unit (51) for generating an identification code with reference to the identification signals received from said processing units (4);

    a database (52) storing a plurality of reference codes, and a plurality of bread-making parameter sets that correspond to the reference codes, respectively; and

    a retrieving unit (53) for comparing the identification code generated by said code-generating unit (51) with the reference codes stored in said database (52), and for retrieving, from said database (52), one of the bread-making parameter sets as the bread-making indicator which corresponds to one of the reference codes that conforms to the identification code;

    wherein said bread maker executes the bread making program according said one of the bread-making parameter sets to make bread using the bread ingredients stored in the container (9).

9.  The bread maker as claimed in Claim 8, wherein said code-generating unit (51) includes:

    a plurality of n-bit analog-to-digital converting (ADC) modules (511), each for calculating a discrete value based on a respective one of the identification signals and a reference voltage value according to the following equation:

$$\texttt{discrete value} = 2^n \times {V_r}\big/{VDD} \, ,$$

    where $V_r$ represents a voltage value of the identification signal, VDD represents the reference voltage value, and $n$ is an integer greater than or equal to 0; and

    a combining module (512) for combining the discrete values into the identification code.

10. A container (9) for receiving bread ingredients therein, and configured to be mounted in a bread maker as claimed in Claim 1, said container comprising:

    an outer surface (90) provided with at least one color symbol (91).

11. The container (9) as claimed in Claim 10, wherein said color symbol (91) is associated with the bread making program, with which the bread maker is configured automatically to make bread using the bread ingredients stored in said container (9).

12. The container (9) as claimed in Claim 10, wherein said outer surface (90) is provided with a plurality of said color symbols (91), and a combination of said color symbols (91) is associated with the bread making program.

FIG.1

FIG.2

FIG.3

FIG.4

EP 3 039 966 A1

FIG.5

**EP 3 039 966 A1**

**EUROPEAN SEARCH REPORT**

Application Number

EP 15 20 1474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 357 504 A2 (SAMSUNG ELECTRONICS CO LTD [KR]) 29 October 2003 (2003-10-29) * paragraph [0008]; figure 5 * ----- | 1-12 | INV. A21B7/00 |
| Y | WO 00/65527 A1 (PRIMERA TECHNOLOGY INC [US]) 2 November 2000 (2000-11-02) * figure 6 * ----- | 1-12 | |
| A | CN 102 973 163 A (TSANN KUEN ZHANGZHOU ENTPR CO) 20 March 2013 (2013-03-20) * claim 4; figure 10 * ----- | 1-12 | |
| | | | TECHNICAL FIELDS SEARCHED (IPC) A21B G06K G01J |

| The present search report has been drawn up for all claims | | |
|---|---|---|
| Place of search | Date of completion of the search | Examiner |
| The Hague | 25 April 2016 | Adant, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 039 966 A1**

## ANNEX TO THE EUROPEAN SEARCH REPORT
## ON EUROPEAN PATENT APPLICATION NO.

EP 15 20 1474

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2016

| Patent document cited in search report | | Publication date | Patent family member(s) | | Publication date |
|---|---|---|---|---|---|
| EP 1357504 | A2 | 29-10-2003 | CN | 1452934 A | 05-11-2003 |
| | | | EP | 1357504 A2 | 29-10-2003 |
| | | | JP | 3703791 B2 | 05-10-2005 |
| | | | JP | 2003310454 A | 05-11-2003 |
| | | | KR | 20030083349 A | 30-10-2003 |
| | | | US | 2003196557 A1 | 23-10-2003 |
| WO 0065527 | A1 | 02-11-2000 | AU | 4653000 A | 10-11-2000 |
| | | | US | 6354502 B1 | 12-03-2002 |
| | | | WO | 0065527 A1 | 02-11-2000 |
| CN 102973163 | A | 20-03-2013 | NONE | | |

For more details about this annex : see Official Journal of the European Patent Office, No. 12/82

EPO FORM P0459

13